# EUROPEAN PATENT APPLICATION

(11) **EP 1 881 721 A1**
(43) Date of publication of application: **23.01.2008**
(21) Application number: 07013403.6
(22) Date of filing: 09.07.2007
(51) Int. Cl.: H04Q 7/38

(54) **Hand over control system, mobile communication system and hand over control method for use therewith**

(30) Priority: 19.07.2006 JP 2006196302
(71) Applicant: NEC Corporation, Minato-ku Tokyo (JP)
(72) Inventor: Takai, Kenichi, Tokyo (JP)
(74) Representative: Glawe, Delfs, Moll

(57) **Abstract**

A system according to an exemplary aspect of the invention is a hand over control system for performing a connection switching from a source base station to a target base station along with movement of a mobile station, including a control unit for controlling the connection switching in accordance with a comparison result of comparing a received signal quality of an up-link signal from the mobile station to the source base station and a received signal quality of an up-link signal from the mobile station to the target base station, wherein the target base station performs the measurement of the received signal quality of the up-link signal from the mobile station to the target base station without decoding communication data from the mobile station until the connection switching is performed.

## Description

### INCORPORATION BY REFERENCE

This application is based upon and claims the benefit of priority from Japanese patent application No. 2006-196302, filed on July 19, 2006, the disclosure of which is incorporated herein in its entirety by reference.

### BACKGROUND OF THE INVENTION

### Field of the Invention

The present invention relates to a hand over control system, a mobile communication system and a hand over control method for use therewith, and more particularly, to a hand over control method for use in a CDMA (Code Division Multiple Access) mobile communication system, for example.

### Related Art

The third-generation mobile communication system with the CDMA method has a problem that because too much priority is given to functions, the complexity of processing escalates and the equipment investment of the device or system development vendor or communication operators becomes huge, causing a delay in introducing (spreading) the system.

In examining the 3.5 generation or B3G (B 3 Generation) system that is called a third-generation succeeding system, there is a move afoot to make the entire system inexpensive and simple by simplifying the process of a base station and upper-layer control station from the above reflection.

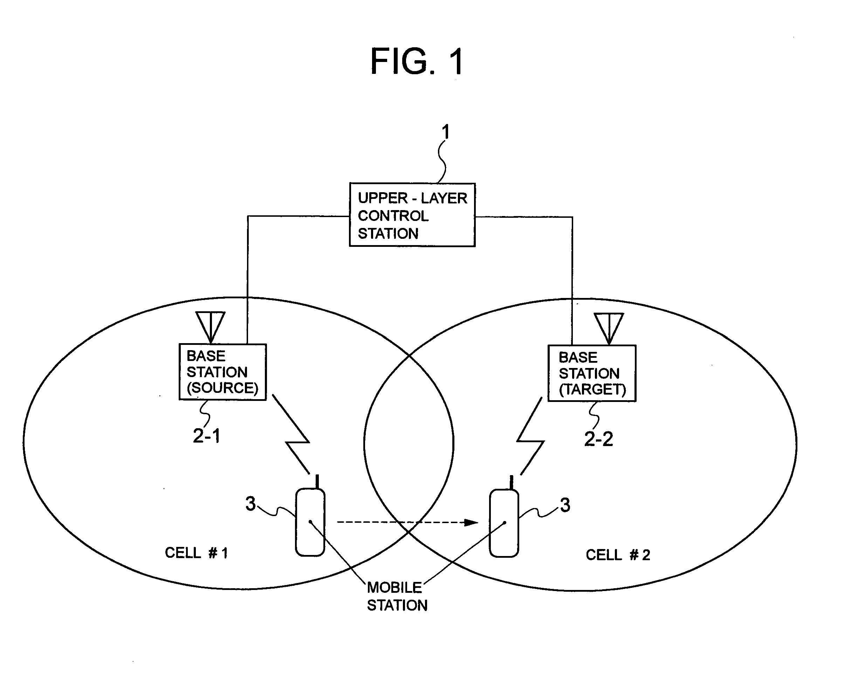

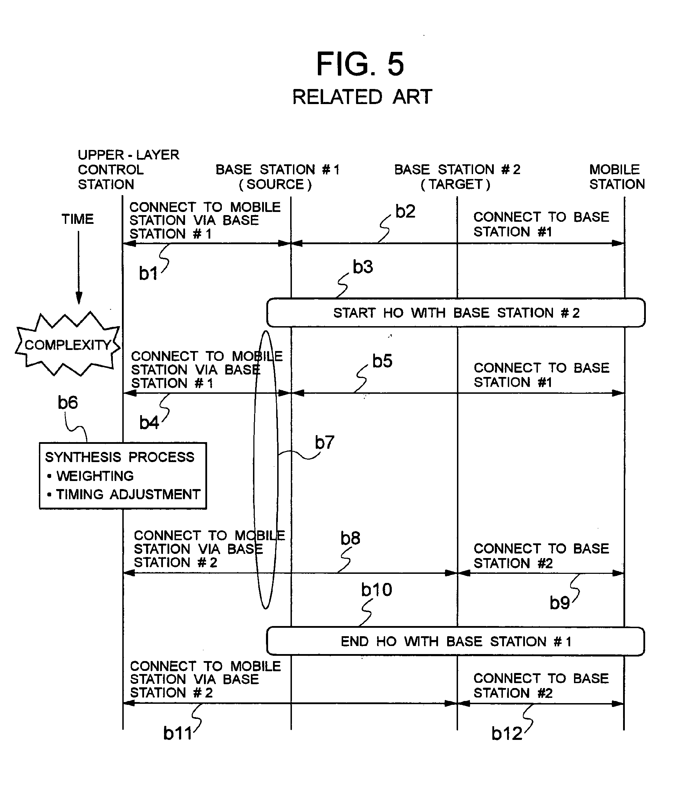

FIG. 5 shows a flow of connection operation during hand over (HO: HandOver) in the mobile communication system of the related art. Referring to FIG. 5, the connection operation among an upper-layer control station, a base station and a mobile station will be described below. The hand over in this mobile communication system is performed, when the mobile station 3 moves from a service area (cell #1) managed by the base station 2-1 to a service area (cell #2) managed by the base station 2-2, for example, as shown in FIG. 1 (e.g., refer to Japanese Patent Laid-Open No. 2001-36953). The base stations 2-1 and 2-2 are connected to the upper-layer control station 1.

When the mobile station 3 is connected to the base station 2-1, the communication data with the mobile station 3 is communicated via the base station 2-1 to the upper-layer control station 1 (steps b1, b2 of FIG. 5). An instance where the mobile station 3 moves toward the service area (cell #2) of the base station 2-2 and is ready to make hand over with the base station 2-2 (step b3 of FIG. 5), are described below. Herein, a hand over possibility determination operation is well known, and its explanation is omitted.

If the hand over of the mobile station 3 with the base station 2-2 is started, the base station 2-2 transmits or receives a signal to or from the mobile station 3, so that the mobile station 3 may connect with the base station 2-2 (steps b4 to b9 of FIG. 5). On the other hand, the mobile station 3 continues the connection with the base station 2-1 (step b5 of FIG. 5). Herein, both the base stations 2-1 and 2-2 receive and decode an up-link signal from the mobile station 3, and transmit the decoded data to the upper-layer control station 1 (steps b4, b8 of FIG. 5).

This is a soft hand over state (step b7 of FIG. 5), in which the upper-layer control station 1 is required to make a process for synthesizing data of the mobile station 3 transmitted from both the base stations 2-1 and 2-2. At this time, the upper-layer control station 1 has complex processes such as weighting the received data according to the quality of each received data from the base stations 2-1 and 2-2, and correcting for a timing drift (step b6 of FIG. 5). Since these processes occur for each mobile station, the processing load tends to increase.

Further, if the mobile station 3 goes away from the service area (cell #1) of the base station 2-1 (= the received signal quality from the base station 2-1 is a fixed value or lower), the upper-layer control station 1 generates an instruction of ending the hand over with the base station 2-1 to each of the base stations 2-1, 2-2 and the mobile station 3 (step b10 of FIG. 5). Thereby, the mobile station 3 will be connected to only the base station 2-2 (steps b11, b12 of FIG. 5).

In the mobile communication system with the CDMA method represented by the third-generation mobile communication system, there is an advantage that the mobile station can move between base stations without causing instantaneous interruption of communication and the relatively stable communication can be also maintained under the bad propagation environment by taking advantage of a feature that the mobile station can communicate with a plurality of base stations at the same time.

In this manner, the state where the mobile station communicates with the plurality of base stations is called a "soft hand over" or "diversity hand over" (hereinafter, soft hand over). On the contrary, the hand over in which the switching of communication frequency is required by movement between base stations and an instantaneous interruption of communication occurs is called a "hard hand over".

The hard hand over has an advantage that it has simpler processing than the soft hand over, but has a disadvantage that the communication is instantaneously interrupted, as described above. On the other hand, the soft hand over is excellent in terms of the stability and quality of communication, but has a disadvantage that the processes for synthesizing and weighting the up-link (from the mobile station to the base station) signals received from the plurality of base stations are required, making the process of the base station or upper-layer control station complex and the entire system huge in size and high in cost, so that the investment taken for development and operation is increased.

An exemplary object of the invention is to provide a hand over control system, a mobile communication system and a hand over control method for use with therewith in which the process and the configuration of the base station associated with hand over can be simplified and the development cost of the system and device and the system installation cost are reduced.

### BRIEF SUMMARY OF THE INVENTION

A system according to an exemplary aspect of the invention is a hand over control system for performing a connection switching from a source base station to a target base station along with movement of a mobile station, including:
a control unit for controlling the connection switching in accordance with a comparison result of comparing a received signal quality of an up-link signal from the mobile station to the source base station and a received signal quality of an up-link signal from the mobile station to the target base station;
wherein the target base station performs the measurement of the received signal quality of the up-link signal from the mobile station to the target base station without decoding communication data from the mobile station until the connection switching is performed.

A method according to an exemplary aspect of the invention is a hand over control method for performing a connection switching from a source base station to a target base station along with movement of a mobile station, including:
controlling for switching the connection in accordance with a comparison result of comparing a received signal quality of an up-link signal from the mobile station to the source base station and a received signal quality of an up-link signal from the mobile station to the target base station, in a hand over control unit;
wherein the target base station performs the measurement of the received signal quality of the up-link signal from the mobile station to the target base station without decoding communication data from the mobile station until the connection switching is performed.

### BRIEF DESCRIPTION OF THE DRAWINGS

FIG. 1 is a block diagram showing a configuration example of a mobile communication system according to one exemplary embodiment of the present invention;
FIG. 2 is a block diagram showing a configuration example of an upper-layer control station of FIG. 1;
FIG. 3 is a block diagram showing a configuration example of a base station of FIG. 1;
FIG. 4 is a sequence chart showing a flow of connection operation during the hand over operation according to one exemplary embodiment of the invention; and
FIG. 5 is a sequence chart showing a flow of connection operation during the hand over operation based on the related art.

### DETAILED DESCRIPTION OF EXEMPLARY EMBODIMENT

The mobile communication system of the invention can simplify the process of the base station or upper-layer control station required for hand over while securing the connection stability after hand over of the mobile station.

In the mobile communication system of the invention, the up-link (from the mobile station to the base station) signal is not decoded or synthesized by two or more base stations at the same time (= the soft hand over state made by the conventional techniques is not performed). Instead, the target base station is provided with means of performing the measurement of the received signal quality of the up-link signal from the mobile station, and notifying only the quality information to the upper-layer control station or source base station.

The notified upper-layer control station or source base station compares the received signal quality from the target base station with the received signal quality of the source base station, and performs the connection switching to the target base station if it is determined that the stable connection switching can be performed. For example, when a period in which the received signal quality of the up-link signal in the target base station is better than that in the source base station, is a predetermined period, the connection switching is performed. After the connection switching, the decoded data of the up-link signal is transmitted from the target base station to the upper-layer control station.

Thereby, in the mobile communication system of the invention, the process or configuration of the base station involving in the hand over can be simplified, whereby the development cost of the system and device and the system installation cost can be reduced. Also, in the mobile communication system of the invention, even if the hand over process is simplified, the deterioration of the stability in connection switching can be suppressed.

The exemplary embodiment of the present invention will be described below with reference to the drawings. FIG. 1 is a block diagram showing a configuration example of a mobile communication system according to one embodiment of the invention. In FIG. 1, the mobile communication system according to one embodiment of the invention comprises an upper-layer control station 1, the base stations 2-1 and 2-2 connected to the upper-layer control station 1 to relay the communication with a mobile station 3, the mobile station 3, and the service areas (cells #1, #2) managed by the base stations 2-1 and 2-2, respectively.

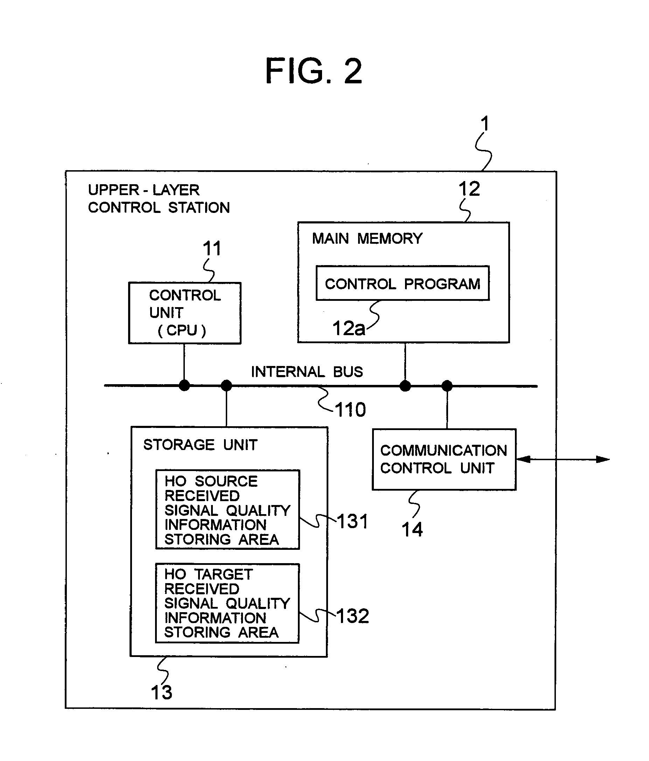

FIG. 2 is a block diagram showing a configuration example of the upper-layer control station 1 of FIG. 1. In FIG. 2, the upper-layer control station 1 comprises a CPU (Central Processing Unit) 11, a main memory 12 for storing a control program 12a performed by the CPU 11, a storage unit 13 for use as a working area when the CPU 11 performs the control program 12a, a communication control unit 14 for controlling the communication with the base stations 2-1 and 2-2, and an internal bus 110 for connecting the CPU 11, the main memory 12, the storage unit 13 and the communication control unit 14.

The storage unit 13 comprises an HO source received signal quality information storing area 131 for storing the received signal quality information of the up-link signal from a hand over (HO: HandOver) source base station, and an HO target received signal quality information storing area 132 for storing the received signal quality information of the up-link signal from an HO target base station.

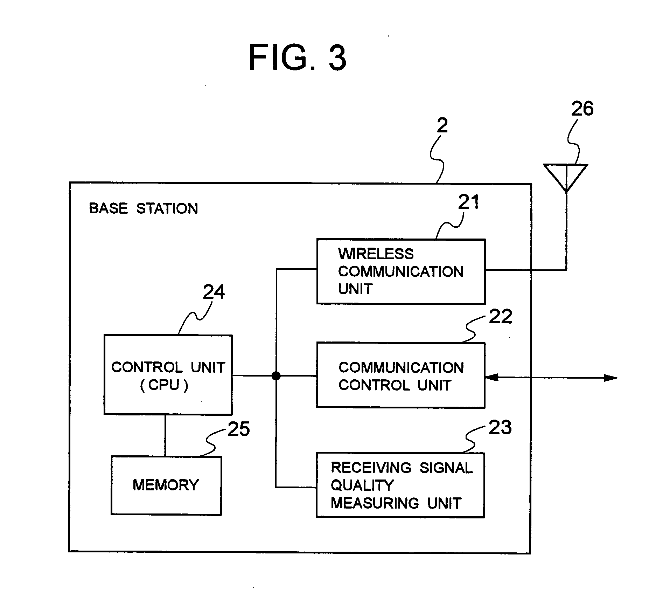

FIG. 3 is a block diagram showing a configuration example of the base station 2 of FIG. 1. In FIG.3, the base station 2 comprises an antenna 26 and a wireless communication unit 21 for communicating with a mobile station, a communication control unit for communicating with an upper-layer control station, a received signal quality measurement unit 23 for measuring a quality of an up-link signal from the mobile station (for example, RACH: Random Access Channel), a CPU 24 for controlling these units, and a memory 25 for storing a control program performed by the CPU 24.

The typical components of this embodiment are the upper-layer control station 1, the base stations 2-1 and 2-2, and the mobile station 3. The upper-layer control station 1 is ranked in the upper layer than the base stations 2-1 and 2-2, and has a function of controlling both the base stations 2-1 and 2-2. Herein, it is assumed that the base station 2-1 is the source base station and the base station 2-2 is the target base station.

The upper-layer control station 1 is not necessarily the required component in this embodiment, but the source base station 2-1 may realize the same function as the upper-layer control station 1. Herein, for the generalization, the upper-layer control station 1 and the source base station 2-1 are shown independently as separate components. It is assumed that the mobile station 3 moves within the service area (cell #1, cell #2) of the base station 2-1 or base station 2-2.

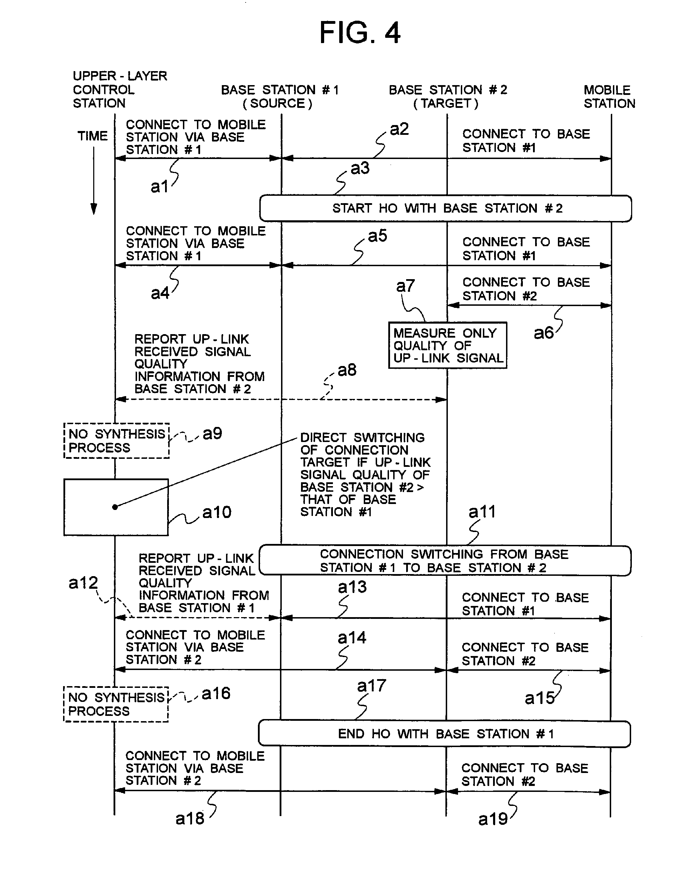

FIG. 4 is a sequence chart showing a flow of connection operation during the hand over operation according to one exemplary embodiment of the invention. Referring to FIGS. 1 to 4, the flow of connection operation during the hand over operation according to one exemplary embodiment of the invention will be described below. The processing operation of the upper-layer control station 1 in FIG. 4 is fulfilled when the CPU 11 performs a control program 12a.

In FIG. 4, it is assumed that the mobile station 3 moves from the service area (cell #1) of the base station 2-1 to the service area (cell #2) of the base station 2-2, in which the connection operations from the upper-layer control station 1 to the mobile station 3 via the base station 2-1 and from the upper-layer control station 1 to the mobile station 3 via the base station 2-2, are shown.

At first, the mobile station 3 is started in a state connected to the base station 2-1. At this time, the communication data with the mobile station 3 is communicated via the base station 2-1 to the upper-layer control station 1 (steps a1, a2 of FIG. 4).

Next, it is assumed that the mobile station 3 moves toward the service area (cell #2) of the base station 2-2, and is ready to perform the hand over with the base station 2-2 (step a3 of FIG. 4). Though a hand over possibility determination operation, like the related art, is not shown in the drawing, a common control signal transmitted steadily from each of the base stations 2-1, 2-2 is generally observed by the mobile station 3, which then reports its result via the base station 2-1 or 2-2 being connection to the upper-layer control station 1 to determine the hand over possibility.

If the hand over of the mobile station 3 with the base station 2-2 is started, the base station 2-2 transmits or receives a signal to or from the mobile station 3, so that the mobile station 3 may be connectable to the base station 2-2 (step a6 of FIG. 4). On the other hand, the mobile station 3 keeps the connection with the base station 2-1 (steps a4, a5 of FIG. 4).

Herein, the base station 2-2 measures the received signal quality (e.g., received electric field strength, Eb/Io, error ratio, etc.) of the up-link signal from the mobile station 3 (step a7 of FIG. 4), and only reports its measurement result to the upper-layer control station 1 (step a8 of FIG. 4), but does not perform the decoding of communication (user) data and the transmission (of decoded data) to the upper-layer control station 1. Thereby, the process for synthesizing data at the upper-layer control station 1 is unnecessary (step a9 of FIG. 4).

Further, it is assumed that the mobile station 3 approaches the service area (cell #2) of the base station 2-2, so that the signal quality from the base station 2-2 is getting better than from the base station 2-1. The upper-layer control station 1 temporarily holds the received signal quality information reported from the base stations 2-1 and 2-2 in the HO source received signal quality information storing area 131 and the HO target received signal quality information storing area 132 respectively, and determines whether or not the connection is switched by comparing them.

The upper-layer control station 1 generates a connection switching instruction to each of the base stations 2-1, 2-2 and the mobile station 3, if the received signal quality of the base station 2-2 is better than the received signal quality of the base station 2-1 (step a10 of FIG. 4). After the connection switching occurs from the base station 2-1 to the base station 2-2 (step all of FIG. 4), the base station 2-2 takes charge of decoding the received data from the mobile station 3 and transmitting the decoded data to the upper-layer control station 1 (steps a14, a15 of FIG. 4).

On the other hand, the base station 2-1 only measures the received signal quality of the up-link signal from the mobile station 3, and reports it to the upper-layer control station 1, but does not make the decoding of communication (user) data and the transmission (of decoded data) to the upper-layer control station 1 (steps a12, a13 of FIG. 4). At this time, the upper-layer control station 1 can dispense with the process for synthesizing data (step a16 of FIG. 4).

Further, if the mobile station 3 goes away from the service area (cell #1) of the base station 2-1 (= the received signal quality from the base station 2-1 is a fixed value or lower), the upper-layer control station 1 generates a command of ending the hand over with the base station 2-1 to each of the base stations 2-1, 2-2 and the mobile station 3 (step a17 of FIG. 4). Thereby, the mobile station 3 is connected to the base station 2-2 alone (steps a18, a19 of FIG. 4).

In this way, in this embodiment, the process and configuration of each of the base stations 2-1, 2-2 involved in the hand over can be simplified, whereby the development costs of the system and device and the system installation cost can be reduced. Also, in this embodiment, even if the hand over process is simplified, the deterioration of the stability in connection switching from the base station 2-1 to the base station 2-2 can be suppressed.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

## Claims

1. A hand over control system for performing a connection switching from a source base station to a target base station along with movement of a mobile station, comprising:
control means for controlling the connection switching in accordance with a comparison result of comparing a received signal quality of an up-link signal from the mobile station to the source base station and a received signal quality of an up-link signal from the mobile station to the target base station;
wherein the target base station performs the measurement of the received signal quality of the up-link signal from the mobile station to the target base station without decoding communication data from the mobile station until the connection switching is performed.

2. The hand over control system according to claim 1, wherein, after the connection switching is performed, the source base station performs the measurement of the received signal quality of the up-link signal from the mobile station to the source base station without decoding communication data from the mobile station.

3. The hand over control system according to claim 1 or 2, wherein, when the received signal quality of the up-link signal from the mobile station to the target base station is better than the received signal quality of the up-link signal from the mobile station to the source base station, the control means performs the connection switching.

4. The hand over control system according to claim 3, wherein, when a period in which the received signal quality of the up-link signal from the mobile station to the target base station is better than the received signal quality of the up-link signal from the mobile station to the source base station, is a predetermined period, the control means performs the connection switching.

5. The hand over control system according to any one of claims 1 to 4, wherein the control means is located in an upper-layer control station which manages the source base station and the target base station.

6. The hand over control system according to any one of claims 1 to 5, wherein the control means is located in the source base station.

7. The hand over control system according to claim 5 or 6, wherein the source base station transmits the decoded data of the communication data from the mobile station to the upper-layer control station until the connection switching is performed, and the target base station transmits the decoded data from the mobile station to the upper-layer control station after the connection switching is performed.

8. A mobile communication system comprising the hand over system according to any one of claims 1 to 7.

9. A hand over control method for performing a connection switching from a source base station to a target base station along with movement of a mobile station, comprising:
a step of controlling for switching the connection in accordance with a comparison result of comparing a received signal quality of an up-link signal from the mobile station to the source base station and a received signal quality of an up-link signal from the mobile station to the target base station, in a hand over control unit;
wherein the target base station performs the measurement of the received signal quality of the up-link signal from the mobile station to the target base station without decoding communication data from the mobile station until the connection switching is performed.

10. The hand over control method according to claim 9, wherein, after the connection switching is performed, the source base station performs the measurement of the received signal quality of the up-link signal from the mobile station to the source base station without decoding communication data from the mobile station.

11. The hand over control method according to claim 9 or 10, wherein, when the received signal quality of the up-link signal from the mobile station to the target base station is better than the received signal quality of the up-link signal from the mobile station to the source base station, the connection switching is performed in the hand over control unit.

12. The hand over control method according to claim 11, wherein, when a period in which the received signal quality of the up-link signal from the mobile station to the target base station is better than the received signal quality of the up-link signal from the mobile station to the source base station, is a predetermined period, the connection switching is performed in the hand over control unit.

13. The hand over control method according to any one of claims 9 to 12, wherein the hand over control unit is located in an upper-layer control station which manages the source base station and the target base station.

14. The hand over control method according to any one of claims 9 to 12, wherein the hand over control unit is located in the source base station.

15. The hand over control method according to claim 13 or 14, wherein the source base station transmits the decoded data of the communication data from the mobile station to the upper-layer control station until the connection switching is performed, and the target base station transmits the decoded data from the mobile station to the upper-layer control station after the connection switching is performed.
